# EUROPEAN PATENT APPLICATION

(11) **EP 2 251 626 A2**
(43) Date of publication of application: **17.11.2010**
(21) Application number: 10161510.2
(22) Date of filing: 29.04.2010
(51) Int. Cl.: F25J 3/04, F25B 27/02

(54) **Efficiently compressing nitrogen in a combined cycle power plant**

(30) Priority: 04.05.2009 US 435340
(71) Applicant: General Electric Company, Schenectady, NY 12345 (US)
(72) Inventor: Mazumder, Indrajit, 560043 Bangalore (IN); Chandrabose, Shinoj Vakkayil, 680731 Thrissur (IN); Ravikumar, Rajeshkumar, 560102 Bangalore (IN); Saha, Rajarshi, 560066 Bangalore (IN)
(74) Representative: Gray, Thomas

(57) **Abstract**

A system and method for reduction of diluent gaseous nitrogen (DGAN) compressor power in combined cycle power plant. A vapor absorption chiller (VAC) may be utilized to generate and transmit cooled fluid, such as water (160), to one or more heat exchangers located upstream (150) and/or downstream (152,154) of at least one compressor of the DGAN compressor system (124). Utilization of these heat exchangers may cool the temperature of the nitrogen, which may allow for less energy to be expended by the DGAN in compression of the nitrogen.

## Description

### BACKGROUND OF THE INVENTION

The subject matter disclosed herein relates to a system and method for efficiently compressing nitrogen in a combined cycle power plant.

Syngas may be produced by the gasification of a feedstock, such as coal, and may be utilized as fuel in an integrated gasification combined cycle (IGCC) power plant. In an IGCC power plant, the gas turbine cycle can be referred to as a topping cycle, and the steam turbine cycle can be referred to as a steam bottoming cycle. The gas turbine topping cycle typically has at least one compressor, at least one combustor, and an expander. The syngas may be fed into a combustor of a gas turbine of the IGCC power plant and ignited to power the gas turbine. One undesirable byproduct of this combustion of the syngas is NOx (e.g. Nitrous Oxide or Nitrogen Dioxide), which is a pollutant. One approach to alleviate this NOx pollutant is to introduce nitrogen into the gas turbine by the injection of nitrogen directly into the combustion section of the gas turbine. Direct injection of nitrogen into the combustion section may dramatically reduce the total nitrous oxide emissions for the entire IGCC system. Additionally, injection of nitrogen into the combustion section of the gas turbine may allow for increases of power due to increased mass flow during expansion in the turbine expander section (up to the mechanical limit of the turbine) without violating operational constraints.

However, there exists a difficulty with the injection of nitrogen into the combustion chamber of the gas turbine. Nitrogen coming from an air Separation Unit (ASU) may be at a lower pressure compared to the combustor pressure. Accordingly, nitrogen may be compressed, for example, to pressure levels equal to or higher than those in the combustion section for proper injection to occur into the combustor chamber. Substantial power may be used to compress the nitrogen to a necessary level for injection into the combustion chamber. Accordingly, there is a need for methods and systems that may reduce power consumption in compressing nitrogen for injection into a combustor of a gas turbine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a nitrogen compressor system comprising at least one compressor adapted to compress nitrogen, and a vapor absorption chiller (VAC) adapted to circulate a coolant through at least one coolant path through the nitrogen compressor system.

In a second embodiment, a system includes an air separation unit (ASU) adapted to separate nitrogen from an air supply, a diluent gaseous nitrogen (DGAN) compressor system comprising at least one compressor adapted to receive nitrogen from the ASU and to compress the nitrogen, a vapor absorption chiller (VAC) adapted to circulate a coolant through at least one coolant path through the nitrogen compressor system, and a gas turbine comprising a combustor adapted to receive the compressed nitrogen from the DGAN compressor.

In a third embodiment, a method includes receiving nitrogen at a diluent gaseous nitrogen (DGAN) compressor system, transmitting cooling fluid to a heat exchanger in a nitrogen path of the DGAN compressor system via a vapor absorption chiller (VAC), cooling the nitrogen by transferring heat from the nitrogen to the cooling fluid via the heat exchanger, and compressing the nitrogen via a compressor in the DGAN compressor system.

### BRIEF DESCRIPTION OF THE DRAWINGS

There follows a detailed description of embodiments of the invention by way of example only with reference to the accompanying drawings, in which:
FIG. 1 a schematic block diagram of an embodiment of an integrated gasification combined cycle (IGCC) power plant;
FIG. 2 is a schematic block diagram of an embodiment of the vapor absorption chiller (VAC) and diluent nitrogen (DGAN) compressor of FIG. 1;
FIG. 3 is a schematic block diagram of an embodiment of the VAC of FIG. 2;
FIG. 4 is a schematic block diagram of an embodiment of the VAC and DGAN compressor of FIG. 1;
FIG. 5 is a schematic block diagram of an embodiment of the VAC and DGAN compressor of FIG. 1;
FIG. 6 is a schematic block diagram of an embodiment of the VAC and DGAN compressor of FIG. 1;
FIG. 7 is a schematic block diagram of an embodiment of the VAC and DGAN compressor of FIG. 1.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to techniques and systems for cooling fluid flowing through a diluent gaseous nitrogen (DGAN) compressor, which may be part of an integrated gasification combined cycle (IGCC) power plant. The fluid to be cooled may be gaseous nitrogen. A cooling fluid, such as water, may be supplied from a vapor absorption chiller (VAC) and may be utilized in one or more heat exchangers in the DGAN compressor. The heat exchangers may be utilized in stages that correspond to a multi-stage DGAN compressor. By utilizing multiple heat exchangers corresponding to each compression stage in the DGAN compressor, the nitrogen may be cooled such that the compression system may be optimized, for example, for maximum output and efficiency. The following discussion relates to an IGCC power plant that utilizes a DGAN compressor and a VAC system to cool the fluid flow through the DGAN compressor.

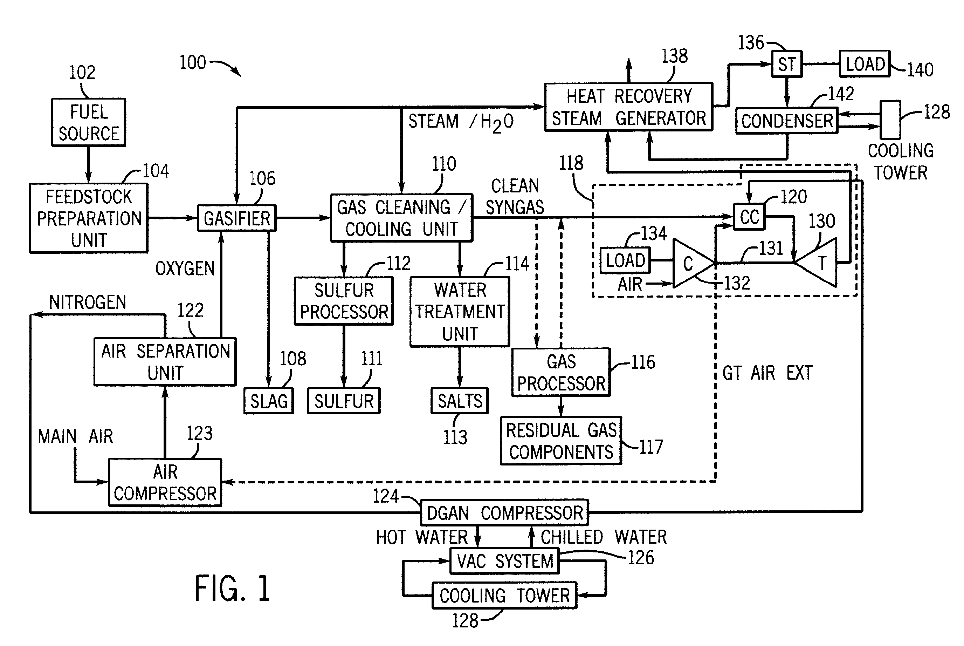

FIG. 1 illustrates an IGCC system 100 that may be powered by synthetic gas, e.g., syngas. Elements of the IGCC system 100 may include a fuel source 102, such as a solid feed, that may be utilized as a source of energy for the IGCC. The fuel source 102 may include coal, petroleum coke, biomass, wood-based materials, agricultural wastes, tars, coke oven gas and asphalt, or other carbon containing items.

The solid fuel of the fuel source 102 may be passed to a feedstock preparation unit 104. The feedstock preparation unit 104 may, for example, resize or reshaped the fuel source 102 by chopping, milling, shredding, pulverizing, briquetting, or palletizing the fuel source 102 to generate feedstock. Additionally, water, or other suitable liquids may be added to the fuel source 102 in the feedstock preparation unit 104 to create slurry feedstock. In other embodiments, no liquid is added to the fuel source, thus yielding dry feedstock.

The feedstock may be passed to a gasifier 106 from the feedstock preparation unit 104. The gasifier 106 may convert the feedstock into a combination of carbon monoxide and hydrogen, e.g., syngas. This conversion may be accomplished by subjecting the feedstock to a controlled amount of steam and oxygen at elevated pressures (e.g. from approximately 20 bar to 85 bar) and temperatures (e.g., approximately 700 degrees Celsius - 1600 degrees Celsius), depending on the type of gasifier 106 utilized. The gasification process may include the feedstock undergoing a pyrolysis process, whereby the feedstock is heated. Temperatures inside the gasified 106 may range from approximately 150 degrees Celsius to 700 degrees Celsius during the pyrolysis process, depending on the fuel source 102 utilized to generate the feedstock. The heating of the feedstock during the pyrolysis process may generate a solid, e.g., char, and residue gases, e.g., carbon monoxide, and hydrogen. The char remaining from the feedstock from the pyrolysis process may only weigh up to approximately 30% of the weight of the original feedstock.

A combustion process may then occur in the gasifier 106. The combustion may include introducing oxygen to the char and residue gases. The char and residue gases may react with the oxygen to form carbon dioxide and carbon monoxide, which provides heat for the subsequent gasification reactions. The temperatures during the combustion process may range from approximately 700 degrees Celsius to 1600 degrees Celsius. Next, steam may be introduced into the gasifier 106 during a gasification step. The char may react with the carbon dioxide and steam to produce carbon monoxide and hydrogen at temperatures ranging from approximately 800 degrees Celsius to 1100 degrees Celsius. In essence, the gasifier utilizes steam and oxygen to allow some of the feedstock to be "burned" to produce carbon monoxide and energy, which drives a second reaction that converts further feedstock to hydrogen and additional carbon dioxide. In this way, a resultant gas is manufactured by the gasifier 106. This resultant gas may include approximately 85% of carbon monoxide and hydrogen, as well as CH₄, CO2 H2O, HCl, HF, COS, NH₃, HCN, and H₂S (based on the sulfur content of the feedstock). This resultant gas may be termed dirty syngas. The gasifier 106 may also generate waste, such as slag 108, which may be a wet ash material. This slag 108 may be removed from the gasifier 106 and disposed of, for example, as road base or as another building material. To cool and clean the dirty syngas, a gas cleaning/cooling unit 110 may be utilized. The gas cleaning/cooling unit 110 may scrub the dirty syngas to remove the HCl, HF, COS, HCN, and H₂S from the dirty syngas, which may include separation of sulfur 111 in a sulfur processor 112 by, for example, an acid gas removal process in the sulfur processor 112. Furthermore, the gas cleaning/cooling unit 110 may separate salts 113 from the dirty syngas via a water treatment unit 114 that may utilize water purification techniques to generate usable salts 113 from the dirty syngas. Subsequently, the gas from the gas cleaning/cooling unit 110 may include clean syngas.

A gas processor 116 may be utilized to remove residual gas components 117 from the clean syngas such as, ammonia, methanol, or any residual chemicals. However, removal of residual gas components 117 from the clean syngas is optional, since the clean syngas may be utilized as a fuel even when containing the residual gas components 117, e.g., tail gas. This clean syngas may be transmitted to a combustor 120, e.g., a combustion chamber, of a gas turbine engine 118 as combustible fuel.

The IGCC system 100 may further include an air separation unit (ASU) 122. The ASU 122 may operate to separate air into component gases by, for example, distillation techniques. The ASU 122 may separate oxygen from the air supplied to it from a supplemental air compressor 123, and the ASU 122 may transfer the separated oxygen to the gasifier 106. Additionally the ASU 122 may transmit separated nitrogen to a diluent gaseous nitrogen (DGAN) compressor 124.

The DGAN compressor 124 may compress the nitrogen received from the ASU 122 at least to pressure levels equal to those in the combustor 120, for proper injection to happen into the combustor chamber. Thus, once the DGAN compressor 124 has adequately compressed the nitrogen to a proper level, the DGAN compressor 124 may transmit the compressed nitrogen to the combustor 120 of the gas turbine engine 118. To aid in the compression of the nitrogen gas by the DGAN compressor 124, the IGCC system 100 may further include a vapor absorption chiller (VAC) system 126.

The VAC system 126 may operate to transmit water to cool the DGAN compressor 124 during operation. The VAC system 126 may also operate to retrieve water made hot through absorption of heat generated by the DGAN compressor 124 while compressing. The VAC system 126 may further cycle the water used in conjunction with the DGAN compressor 124 through a cooling tower 128 that may act as a water reservoir. By cooling the DGAN compressor 124 via the VAC system 126 utilizing the cooling tower 128, the nitrogen in the DGAN compressor 124 may be compressed more easily, that is, use less energy to compress the nitrogen, and, thus, the efficiency of the DGAN compressor 124 may be increased. Furthermore, the use of a VAC system 126 may be beneficial because of its ability to reuse heat that might otherwise be wasted.

As described previously, the compressed nitrogen may be transmitted from the DGAN compressor 124 to the combustor 120 of the gas turbine engine 118 engine. The gas turbine engine 118 may include a turbine 130, a drive shaft 131 and a compressor 132, as well as the combustor 120. The combustor 120 may receive fuel, such as syngas, which may be injected under pressure from fuel nozzles. This fuel may be mixed with compressed air as well as compressed nitrogen from the DGAN compressor 124, and combusted within combustor 120. This combustion may create hot pressurized combustion gases.

The combustor 120 may direct the combustion gases towards an inlet of the turbine 130. As the combustion gases from the combustor 120 pass through the turbine 130, the combustion gases may force turbine blades in the turbine 130 to rotate the drive shaft 131 along an axis of the gas turbine engine 118. As illustrated, drive shaft 131 is connected to various components of the gas turbine engine 118, including the compressor 132. The drive shaft 131 mayconnect the turbine 130 to the compressor 132 to form a rotor. The compressor 132 may include blades coupled to the drive shaft 131. Thus, rotation of turbine blades in the turbine 130 causes the drive shaft 131 connecting the turbine 130 to the compressor 132 to rotate blades within the compressor 132. This rotation of blades in the compressor 132 may cause the compressor 132 to compress air received via an air intake in the compressor 132. The compressed air may then be fed to the combustor 120 and mixed with fuel and compressed nitrogen to allow for higher efficiency combustion. Drive shaft 131 may also be connected to load 134, which may be a stationary load, such as an electrical generator for producing electrical power, for example, in a power plant. Indeed, load 134 may be any suitable device that is powered by the rotational output of the gas turbine engine 118.

The IGCC system 100 also may include a steam turbine engine 136 and a heat recovery steam generation (HRSG) system 138. The steam turbine engine 136 may drive a second load 140. The second load 140 may also be an electrical generator for generating electrical power. However, both the first and second loads 134, 140 may be other types of loads capable of being driven by the gas turbine engine 118 and steam turbine engine 136. In addition, although the gas turbine engine 118 and steam turbine engine 136 may drive separate loads 134 and 140, as shown in the illustrated embodiment, the gas turbine engine 118 and steam turbine engine 136 may also be utilized in tandem to drive a single load via a single shaft. The specific configuration of the steam turbine engine 136, as well as the gas turbine engine 118, may be implementation-specific and may include any combination of sections.

The system 100 may also include the HRSG 138. Heated exhaust gas from the gas turbine engine 118 may be transported into the HRSG 138 and used to heat water and produce steam used to power the steam turbine engine 136. Exhaust from, for example, a low-pressure section of the steam turbine engine 136 may be directed into a condenser 142. The condenser 142 may utilize a cooling tower 128 to exchange heated water for chilled water. The cooling tower 128 may be the same cooling tower 128 used in conjunction with the VAC system 126. Alternatively, the illustrated cooling towers 128 may be independent cooling towers. Regardless, cooling tower 128 acts to provide cool water to the condenser 142 to aid in condensing the steam transmitted to the condenser 142 form the steam turbine engine 136. Condensate from the condenser 142 may, in turn, be directed into the HRSG 138. Again, exhaust from the gas turbine engine 118 may also be directed into the HRSG 138 to heat the water from the condenser 142 and produce steam.

In combined cycle systems such as IGCC system 100, hot exhaust may flow from the gas turbine engine 118 and pass to the HRSG 138, where it may be used to generate high-pressure, high-temperature steam. The steam produced by the HRSG 138 may then be passed through the steam turbine engine 136 for power generation. In addition, the produced steam may also be supplied to any other processes where steam may be used, such as to the gasifier 106. The gas turbine engine 118 generation cycle is often referred to as the "topping cycle," whereas the steam turbine engine 136 generation cycle is often referred to as the "bottoming cycle." By combining these two cycles as illustrated in FIG. 1, the IGCC system 100 may lead to greater efficiencies in both cycles. In particular, exhaust heat from the topping cycle may be captured and used to generate steam for use in the bottoming cycle.

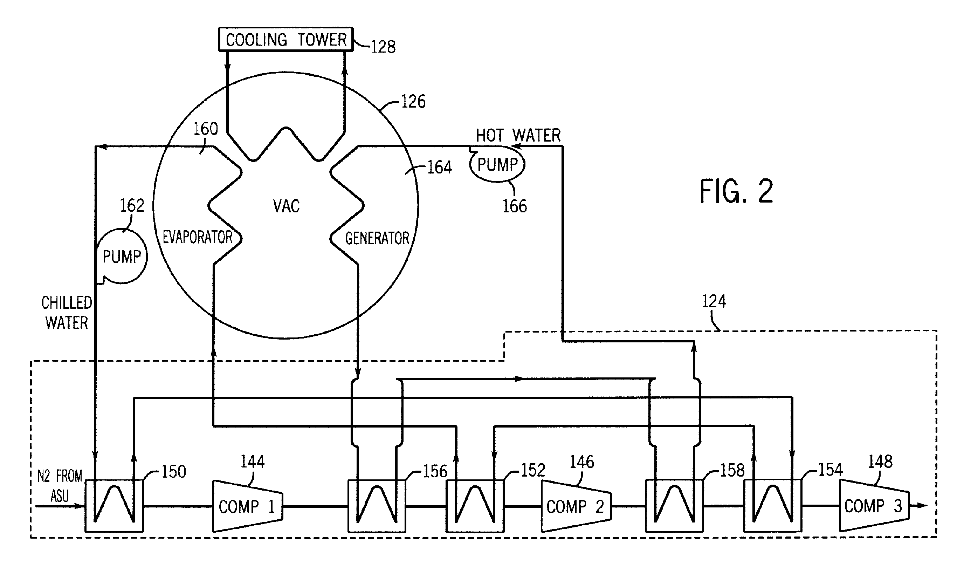

FIG. 2 illustrates the DGAN compressor 124 in conjunction with the VAC system 126 of the IGCC system 100. As illustrated, DGAN compressor 124 may be a multi-stage DGAN compressor 124. That is, the DGAN compressor 124 may include an inlet compressor 144, an intermediate compressor 146, and a final compressor 148. These compressors 144-148 may operate in conjunction (e.g., in series) to compress the nitrogen received from the ASU 122 to a level usable by the combustor 120. Because of the irreversibility during compression, the exit temperature of the nitrogen after compression increases. To reduce this temperature increase, inter-cooling between the stages of compression may be desirable.

The DGAN compressor 124 may include an inlet chilled water heat exchanger 150, an intermediate chilled water heat exchanger 152, and a final chilled water heat exchanger 154. The DGAN compressor 124 may also include an intermediate heated water heat exchanger 156 and a final heated water heat exchanger 158. Collectively, the chilled water heat exchangers 150-154 and the heated water heat exchangers 156-158 may be utilized to reduce the temperature of the nitrogen flowing through the DGAN compressor 124. It should be noted that instead of water, other suitable liquids may be utilized in conjunction with the heat exchangers 150-158. An example of the operation of the heat exchangers 150-158 in conjunction with the compressors 144-148 will be discussed below.

Chilled water may be transmitted from an evaporator 160 of the VAC system 126 via a pump 162 to the first chilled water heat exchanger 150. The chilled water may be, for example, at approximately 40° Fahrenheit (F). The chilled water may pass through the inlet chilled water heat exchanger 150, through a conduit, such as a tube. This conduit may contact the nitrogen as it passes through the first chilled water heat exchanger 150, thus reducing the temperature of the nitrogen from, for example, approximately 80° F to 45° F, while increasing the temperature of the chilled water to, for example, approximately 60° F.

The nitrogen may then pass to the inlet compressor 144. The nitrogen entering the inlet compressor 144 may be at a temperature of approximately 45° F and a pressure of approximately 60 psia (absolute pressure). The inlet compressor 144 may compress the nitrogen from, for example, approximately 60 psia to 120 psia. However, in compressing the nitrogen, the temperature of the nitrogen may also increase from, for example, approximately 45° F to 175° F. To aid in reducing the temperature of the nitrogen, so that the intermediate compressor 146 may expend less energy in compressing the nitrogen, the nitrogen may pass through the intermediate heated water heat exchanger 156.

The intermediate heated water heat exchanger 156 may receive heated water from a generator 164, e.g. a heat exchanger, of the VAC system 126. The water may be at a temperature of approximately 115° F. The heated water may pass through the intermediate heated water heat exchanger 156, through a conduit, such as a tube. This conduit may contact the nitrogen as it passes through the intermediate heated water heat exchanger 156, thus reducing the temperature of the nitrogen from, for example, approximately 175° F to 120° F, while increasing the temperature of the heated water to, for example, approximately 130° F. Subsequent to passing through the intermediate heated water heat exchanger 156, the nitrogen may be passed to the intermediate chilled water heat exchanger 152, so as to come into contact with a conduit containing chilled water. The nitrogen may contact the conduit carrying the chilled water as it passes through the intermediate chilled water heat exchanger 152, thus reducing the temperature of the nitrogen from, for example, approximately 120° F to 100° F, while increasing the temperature of the chilled water from approximately 85° F to 95° F.

The nitrogen may then pass to the intermediate compressor 146. The nitrogen entering the intermediate compressor 146 may be at a temperature of approximately 100° F and at a pressure of approximately 115 psia. The intermediate compressor 146 may compress the nitrogen from, for example, approximately 115 psia to 230 psia. However, in compressing the nitrogen, the temperature of the nitrogen may also increase from, for example, approximately 100° F to 230° F. Again, to aid in reducing the temperature of the nitrogen, so that the final compressor 148 may expend less energy in compressing the nitrogen, the nitrogen may pass through a final heated water heat exchanger 158.

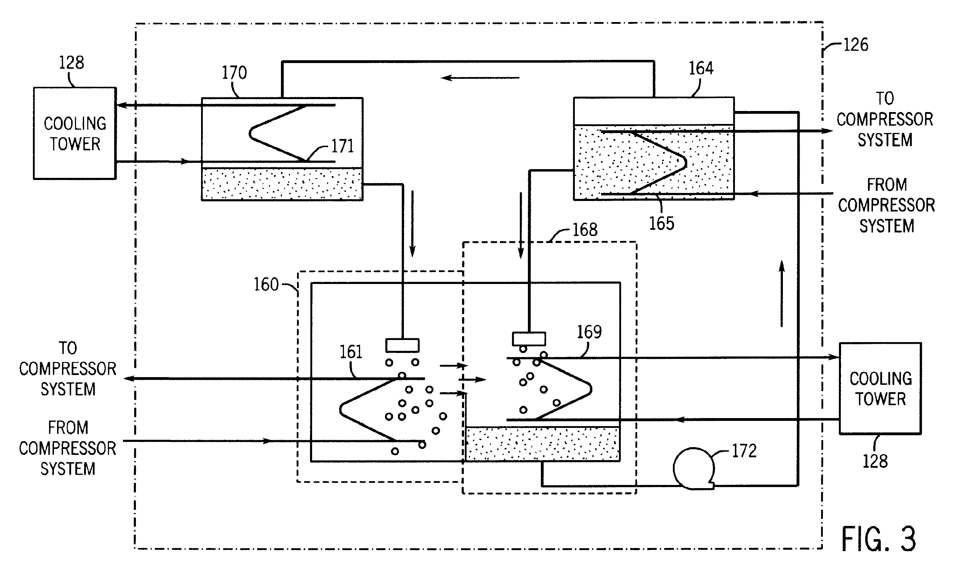

The final heated water heat exchanger 158 may receive heated water from the intermediate heated water heat exchanger 156. The water may be at a temperature of approximately 130° F. The heated water may pass through the final heated water heat exchanger 158, through a conduit, such as a tube. This conduit may contact the nitrogen as it passes through the final heated water heat exchanger 158, thus reducing the temperature of the nitrogen from, for example, approximately 230° F to 140° F, while increasing the temperature of the heated water to, for example, approximately 160°. The heated water may then be transmitted to the generator 164 of the VAC system 126 via a pump 166. Subsequent to passing through the final heated water heat exchanger 158, the nitrogen may be passed to the final chilled water heat exchanger 154, so as to come into contact with a conduit containing chilled water. The nitrogen may contact the conduit carrying the chilled water as it passes through the third chilled water heat exchanger 154, thus reducing the temperature of the nitrogen from, for example, approximately 140° F to 90° F, while increasing the temperature of the chilled water from approximately 60° F to 85° F. The nitrogen may then pass to the final compressor 148. The nitrogen entering the final compressor 148 may be at a temperature of approximately 90° F and at a pressure of approximately 230 psia. The final compressor 148 may compress the nitrogen from, for example, approximately 230 psia to 465 psia. At this pressure, the compressed nitrogen may be introduced into the combustor 120. The flow of chilled and warm water through the DGAN compressor 124 above may be supplied by the VAC system 126. Accordingly, FIG. 3 illustrates the operation of a VAC system 126.

FIG. 3 illustrates an embodiment of VAC system 126. Heat from, for example, the heat exchangers 156 and 158 of FIG. 2, may operate as waste heat sources to provide hot water or steam that may be used to power the VAC system 126. The VAC system 126 may include an evaporator 160, a generator 164, an absorber 168, and a condenser 170. The evaporator 160 may be kept at low pressure, for example, as a vacuum. The low-pressure of the evaporator 160 may cause a refrigerant, such as NH₃ (ammonia), to boil at very low temperature. As illustrated, the evaporator 160 includes a heat exchanger 161 to exchange heat with the DGAN compressor 124 via heat exchangers 150, 152, and 154. In particular, heat exchangers 150, 152, and 154 remove heat from the DGAN compressor 124, and the heat exchanger 161 adds heat to the evaporator 160. The evaporator 160 may also take heat from the surroundings of the evaporator 160. Because of this heat transfer, the refrigerant may be converted into vapor which may flow into the absorber 168. The absorber 168 may combine the refrigerant vapor with water. In addition, the absorber 168 cools and condenses the refrigerant vapor and water via a heat exchanger 169 that circulates a coolant (e.g., water) with cooling tower 128. The water, rich with refrigerant, may then be pumped via an absorbent pump 172 to the generator 164.

In the generator 164, heat may be transferred to the refrigerant rich liquid by an external heat source, such as hot water or steam from the DGAN compressor 124 (e.g., heat exchangers 156 and 158). In particular, the generator 164 has a heat exchanger 165 to receive heat from the heat exchangers 156 and 158 in the DGAN compressor 124. The heat from the hot water or steam may boil the refrigerant off from the rich liquid. The hot and lean liquid then may return back to the absorber 168, where heat may be removed by cooling water flow from cooling tower 128. The refrigerant vapor from the generator 164 may be transmitted to the condenser170, where the refrigerant vapor may be converted into liquid by exchanging heat with cooling water from the cooling tower 128. In particular, the condenser 170 has a heat exchanger 171 to remove heat via circulation of water with the cooling tower 128. The cooled refrigerant may then returned to the low-pressure evaporator 160, where it takes heat from the water from the DGAN compressor system 124, thus completing a VAC thermodynamic cycle.

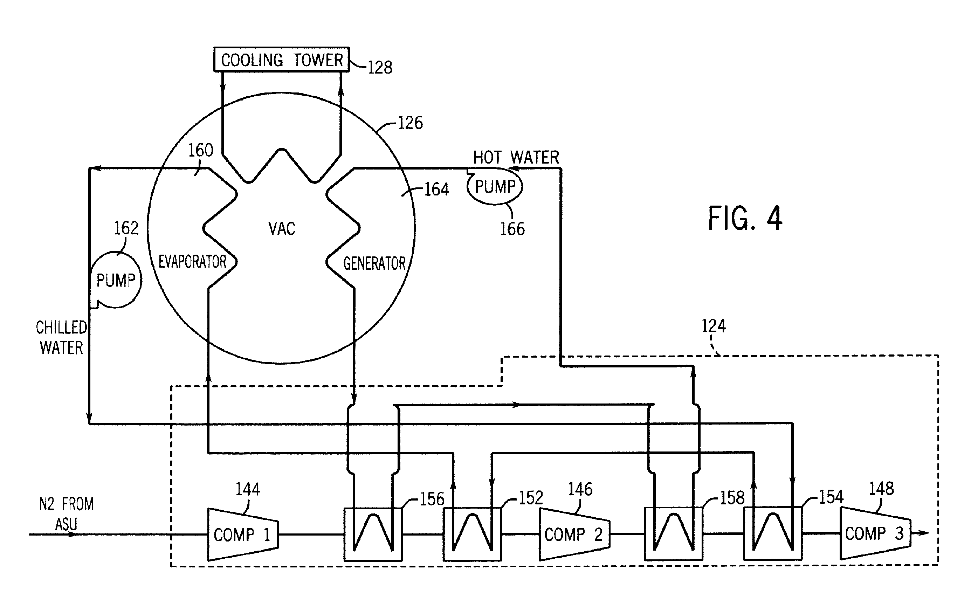

The VAC system 126 as described above may also function with DGAN compressors other than the DGAN compressor 124 illustrated in FIG. 2. For example, a DGAN compressor 124 illustrated in FIG. 4 includes an inlet compressor 144, an intermediate compressor 146, and a final compressor 148 that may operate in conjunction (e.g., in series) to compress the nitrogen received from the ASU 122 to a level usable by the combustor 120. The DGAN compressor 124 of FIG. 4 also may include an intermediate chilled water heat exchanger 152, a final chilled water heat exchanger 154, an intermediate heated water heat exchanger 156, and a final heated water heat exchanger 158 that may function as described above with reference to FIG. 2. However, the DGAN compressor 124 of FIG. 4 does not include an intake chilled water heat exchanger (e.g., 150). Removal of the intake chilled water heat exchanger may reduce the overall cost, and complexity of the DGAN compressor 124.

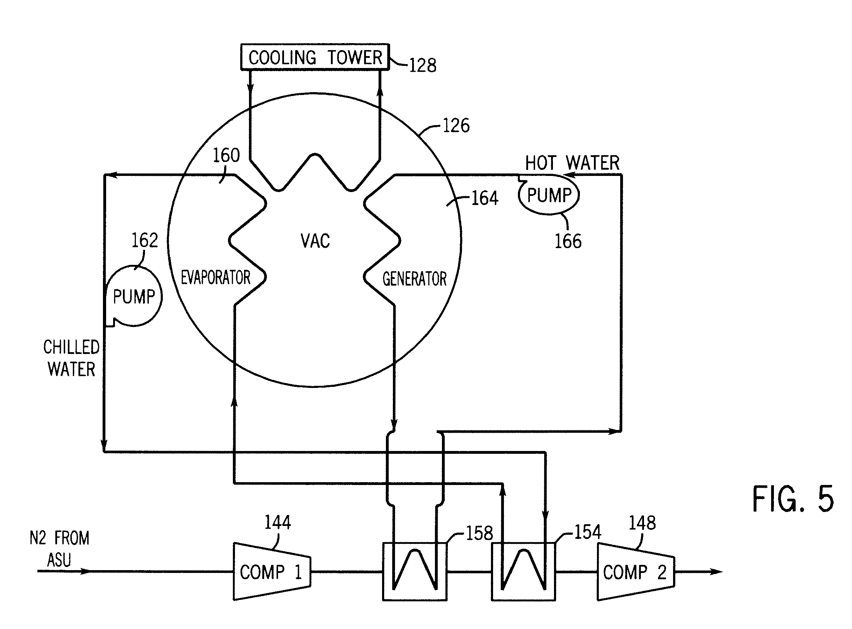

FIG. 5 illustrates another embodiment of the DGAN compressor 124. DGAN compressor 124 of FIG. 5 may be a two-stage compressor that includes an inlet compressor 144 and a final compressor 148 that may operate in conjunction (e.g., in series) to compress the nitrogen received from the ASU 122 to a level usable by the combustor 120. The DGAN compressor 124 of FIG. 5 may further include a chilled water heat exchanger 154 and a heated water heat exchanger 158 that may function as described above with reference to FIG. 2 and FIG. 4. In the illustrated embodiment, additional intake chilled and heated water heat exchangers (e.g., 150, 152, 156) may be removed as unnecessary to the function of the DGAN compressor 124 of FIG. 5 so as to reduce the overall cost, complexity, and size of the DGAN compressor 124.

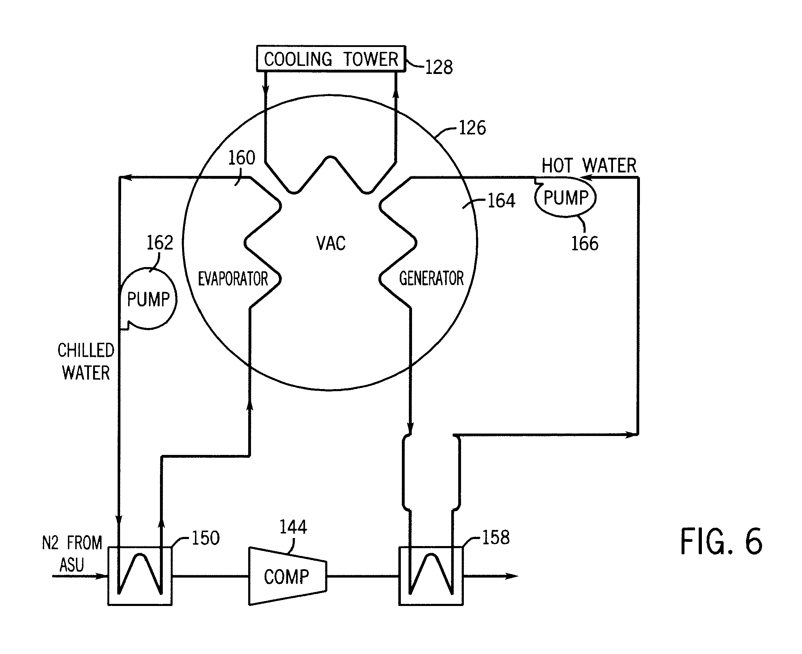

Similarly, FIG. 6 illustrates a further embodiment of the DGAN compressor 124. DGAN compressor 124 of FIG. 6 may be a single stage compressor that includes an inlet compressor 144 that may fully compress the nitrogen received from the ASU 122 to a level usable by the combustor 120. The DGAN compressor 124 of FIG. 6 may further include an inlet chilled water heat exchanger 150 and a final heated water heat exchanger 158 that may function as described above with reference to FIG. 2. Use of the inlet chilled water heat exchanger 150 and a final heated water heat exchanger 158 configured around the inlet compressor 144 may combine to cool the nitrogen both entering and leaving the inlet compressor 144, as well as provide a minimum amount of heat exchangers to provide a closed system cooling mechanism in conjunction with the VAC system 126.

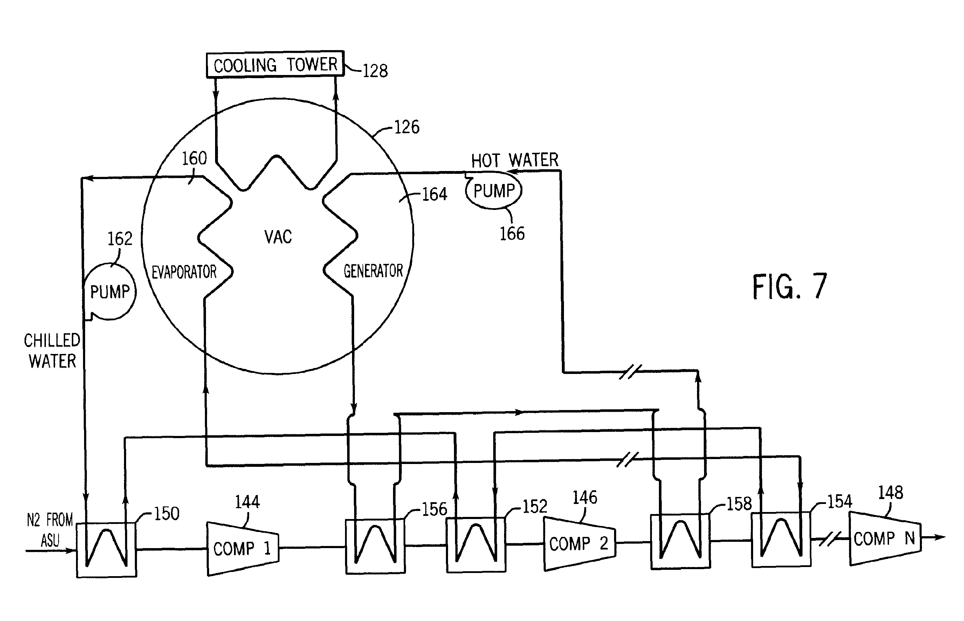

FIG. 7 illustrates an embodiment of an N-stage DGAN compressor 124 in conjunction with the VAC system 126 of the IGCC system 100. As illustrated, DGAN compressor 124 may be a multi-stage DGAN compressor 124. That is, the DGAN compressor 124 may include an inlet compressor 144, a final compressor 148, and multiple intermediate stages (e.g., 2, 3, 4, 5, 6, 7, 8, 9, 10, or more) each including an intermediate compressor 146. These compressors 144-148 may operate in conjunction (e.g., in series) to compress the nitrogen received from the ASU 122 to a level usable by the combustor 120. The DGAN compressor 124 may include an inlet chilled water heat exchanger 150, a final chilled water heat exchanger 154, and multiple intermediate chilled water heat exchanger 152, for example, one or more per each of the multiple intermediate stages including an intermediate compressor 146. The DGAN compressor 124 may also include a final heated water heat exchanger 158 and multiple intermediate heated water heat exchangers 156, one or more per each of the multiple intermediate stages including an intermediate compressor 146. Collectively, the chilled water heat exchangers 150-154 and the heated water heat exchangers 156-158 may be utilized to reduce the temperature of the nitrogen flowing through the DGAN compressor 124. In this manner, each stage of a N-stage DGAN compressor 124 may include corresponding heat exchangers designed to cool the nitrogen gas flowing through the various compressors corresponding to a given compression stage.

For completeness, various aspects of the invention are now set out in the following numbered clauses:
1. A system, comprising:
   a nitrogen compressor system comprising at least a compressor adapted to compress nitrogen; and
   a vapor absorption chiller (VAC) adapted to circulate a coolant through at least one coolant path through the nitrogen compressor system.
2. The system of clause 1, wherein the nitrogen compressor system comprises a heat exchanger in a nitrogen path upstream of the compressor, and the coolant path extends through the heat exchanger.
3. The system of clause 2, wherein the heat exchanger upstream of the compressor comprises a chilled water heat exchanger.
4. The system of clause 1, wherein the nitrogen compressor system comprises a heat exchanger in a nitrogen path downstream of the compressor, and the coolant path extends through the heat exchanger.
5. The system of clause 4, wherein the heat exchanger downstream of the compressor comprises a heated water heat exchanger.
6. The system of clause 1, wherein the nitrogen compressor system comprises a plurality of compression stages with respective compressors and with at least one heat exchanger in the nitrogen path between the plurality of compression stages, and the coolant path extends through the heat exchanger.
7. The system of clause 1, wherein the at least one coolant path comprises a low temperature coolant path extending through a first low temperature heat exchanger in a nitrogen path upstream of the compressor, and a high temperature coolant path extending through a first high temperature heat exchanger in the nitrogen path downstream of the compressor.
8. The system of clause 7, wherein the low temperature coolant path extends through the first, a second, and a third low temperature heat exchanger in the nitrogen path upstream of a first compressor, between first and second compressors, and between second and third compressors, respectively.
9. The system of clause 8, wherein the high temperature coolant path extends through the first and second high temperature heat exchanger, between the first compressor and the second low temperature heat exchanger, and between the second compressor and the third low temperature heat exchanger, respectively.
10. The system of clause 1, wherein the VAC comprises an evaporator adapted to boil a refrigerant, an absorber adapted to generate a refrigerant vapor from the refrigerant, a generator adapted to transfer heat to the refrigerant vapor, and a condenser adapted to adapted to liquefy the refrigerant vapor.
11. A system, comprising:
   an air separation unit (ASU) adapted to separate nitrogen from an air supply;
   a diluent gaseous nitrogen (DGAN) compressor system comprising atleast a compressor adapted to receive nitrogen from the ASU and to compress the nitrogen;
   a vapor absorption chiller (VAC) adapted to circulate a coolant through at least one coolant path through the nitrogen compressor system; and
   a gas turbine comprising a combustor adapted to receive the compressed nitrogen from the DGAN compressor.
12. The system of clause 11, wherein the DGAN comprises a heat exchanger in a nitrogen path upstream of the compressor, and the coolant path extends through the heat exchanger.
13. The system of clause 11, wherein the DGAN comprises a heat exchanger in a nitrogen path downstream of the compressor, and the coolant path extends through the heat exchanger.
14. The system of clause 11, wherein the DGAN comprises a plurality of compression stages with respective compressors and with at least one heat exchanger in the nitrogen path between the plurality of compression stages, and the coolant path extends through the heat exchanger.
15. The system of clause 11, wherein the at least one coolant path comprises a low temperature coolant path extending through a first low temperature heat exchanger in a nitrogen path upstream of the compressor, and a high temperature coolant path extending through a first high temperature heat exchanger in the nitrogen path downstream of the compressor.
16. A method, comprising:
   receiving nitrogen at a diluent gaseous nitrogen (DGAN) compressor system;
   transmitting cooling fluid to a heat exchanger in a nitrogen path of the DGAN compressor system via a vapor absorption chiller (VAC);
   cooling the nitrogen by transferring heat from the nitrogen to the cooling fluid via the heat exchanger; and
   compressing the nitrogen via a compressor in the DGAN compressor system.
17. The method of clause 16, comprising cooling the nitrogen upstream of the compressor.
18. The method of clause 16, comprising cooling the nitrogen via the heat exchanger in the nitrogen path downstream of the compressor.
19. The method of clause 16, comprising transmitting the compressed nitrogen to a combustor in a gas turbine.
20. The method of clause 16, wherein transmitting cooling fluid to a heat exchanger in a nitrogen path of the DGAN compressor system comprises transmitting the nitrogen through a low temperature coolant path extending through a first low temperature heat exchanger in a nitrogen path upstream of the compressor and a high temperature coolant path extending through a first high temperature heat exchanger in the nitrogen path downstream of the compressor, wherein the low temperature coolant path extends through the first, a second, and a third low temperature heat exchanger in the nitrogen path upstream of a first compressor, between first and second compressors, and between second and third compressors, respectively, and wherein the high temperature coolant path extends through the first and second high temperature heat exchanger, between the first compressor and the second low temperature heat exchanger, and between the second compressor and the third low temperature heat exchanger, respectively.

## Claims

1. A system, comprising:
a nitrogen compressor system comprising at least a compressor adapted to compress nitrogen; and
a vapor absorption chiller (VAC) adapted to circulate a coolant through at least one coolant path through the nitrogen compressor system.

2. The system of claim 1, wherein the nitrogen compressor system comprises a heat exchanger in a nitrogen path upstream of the compressor, and the coolant path extends through the heat exchanger.

3. The system of claim 2, wherein the heat exchanger upstream of the compressor comprises a chilled water heat exchanger.

4. The system of claim 1, wherein the nitrogen compressor system comprises a heat exchanger in a nitrogen path downstream of the compressor, and the coolant path extends through the heat exchanger.

5. The system of claim 4, wherein the heat exchanger downstream of the compressor comprises a heated water heat exchanger.

6. The system of any of the preceding claims, wherein the nitrogen compressor system comprises a plurality of compression stages with respective compressors and with at least one heat exchanger in the nitrogen path between the plurality of compression stages, and the coolant path extends through the heat exchanger.

7. The system of any of the preceding claims, wherein the at least one coolant path comprises a low temperature coolant path extending through a first low temperature heat exchanger in a nitrogen path upstream of the compressor, and a high temperature coolant path extending through a first high temperature heat exchanger in the nitrogen path downstream of the compressor.

8. The system of claim 7, wherein the low temperature coolant path extends through the first, a second, and a third low temperature heat exchanger in the nitrogen path upstream of a first compressor, between first and second compressors, and between second and third compressors, respectively.

9. The system of claim 8, wherein the high temperature coolant path extends through the first and second high temperature heat exchanger, between the first compressor and the second low temperature heat exchanger, and between the second compressor and the third low temperature heat exchanger, respectively.

10. The system of any of the preceding claims, wherein the VAC comprises an evaporator adapted to boil a refrigerant, an absorber adapted to generate a refrigerant vapor from the refrigerant, a generator adapted to transfer heat to the refrigerant vapor, and a condenser adapted to adapted to liquefy the refrigerant vapor.

11. A method, comprising:
receiving nitrogen at a diluent gaseous nitrogen (DGAN) compressor system;
transmitting cooling fluid to a heat exchanger in a nitrogen path of the DGAN compressor system via a vapor absorption chiller (VAC);
cooling the nitrogen by transferring heat from the nitrogen to the cooling fluid via the heat exchanger; and
compressing the nitrogen via a compressor in the DGAN compressor system.

12. The method of claim 11, comprising cooling the nitrogen upstream of the compressor.

13. The method of claim 11 or 12, comprising cooling the nitrogen via the heat exchanger in the nitrogen path downstream of the compressor.

14. The method of any of claims 11 to 13, comprising transmitting the compressed nitrogen to a combustor in a gas turbine.

15. The method of any of claims 11 to 14, wherein transmitting cooling fluid to a heat exchanger in a nitrogen path of the DGAN compressor system comprises transmitting the nitrogen through a low temperature coolant path extending through a first low temperature heat exchanger in a nitrogen path upstream of the compressor and a high temperature coolant path extending through a first high temperature heat exchanger in the nitrogen path downstream of the compressor, wherein the low temperature coolant path extends through the first, a second, and a third low temperature heat exchanger in the nitrogen path upstream of a first compressor, between first and second compressors, and between second and third compressors, respectively, and wherein the high temperature coolant path extends through the first and second high temperature heat exchanger, between the first compressor and the second low temperature heat exchanger, and between the second compressor and the third low temperature heat exchanger, respectively.
